# FASCICULE DE BREVET EUROPEEN

(11) **EP 3 774 502 B1**
(45) Date de publication et mention de la délivrance du brevet: **16.11.2022**
(21) Numéro de dépôt: 19715159.0
(22) Date de dépôt: 06.03.2019
(51) Int. Cl.: B62D 21/15

(54) **VÉHICULE COMPRENANT UN DISPOSITIF DE PROTECTION DE BATTERIE DESTINÉ À COOPÉRER AVEC LA JANTE D'UNE ROUE**
FAHRZEUG MIT EINER BATTERIESCHUTZVORRICHTUNG ZUM EINGRIFF MIT DER FELGE EINES RADES
VEHICLE COMPRISING A BATTERY PROTECTION DEVICE INTENDED TO ENGAGE WITH THE RIM OF A WHEEL

(30) Priorité: 10.04.2018 FR 1853094
(43) Date de publication de la demande: 17.02.2021
(73) Titulaire: PSA Automobiles SA, 78300 Poissy (FR)
(72) Inventeur: BOURIOT, Frank, 25550 ALLONDANS (FR); VERDIER, Laurent, 90000 BELFORT (FR)
(86) Numéro de dépôt international: PCT/FR2019/050504
(87) Numéro de publication internationale: WO 2019/197736

(56) Documents cités:
- WO-A2-2014/015094
- DE-A1-102017 127 513
- SE-A1- 1 300 131
- US-A1- 2015 101 877
- US-A1- 2015 101 877

## Description

La présente invention concerne le domaine des équipements de sécurité passive d'un véhicule. Elle se situe plus particulièrement dans le domaine de la protection contre les chocs latéraux des véhicules automobiles de type hybride ou électrique.

Les véhicules automobiles de type électrique comprennent uniquement un moteur électrique. Les véhicules automobiles de type hybride comprennent un moteur thermique en plus d'un moteur électrique. Les deux moteurs fonctionnent simultanément ou alternativement de manière à réduire la puissance totale consommée par le véhicule. La batterie de propulsion du moteur électrique est de forme générale parallélépipédique, et est logée en partie arrière du véhicule, dans le coffre ou sous la caisse. Généralement, la batterie de propulsion alimentant le moteur électrique s'étend au moins partiellement sous les sièges passagers arrière, entre les lieux d'implantation des roues arrière, et selon la direction transversale du véhicule.

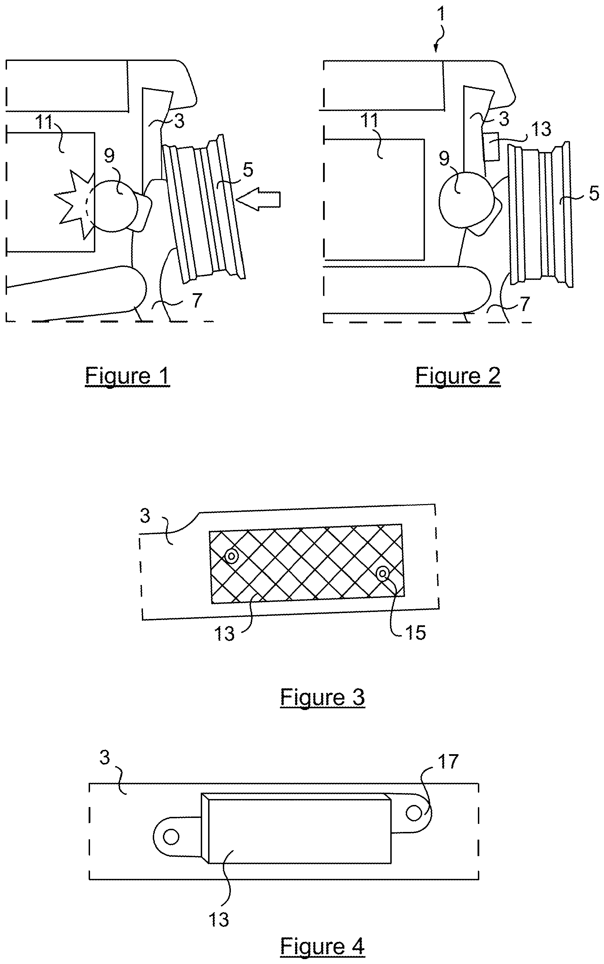

Lorsque le véhicule est soumis à un choc latéral de type poteau au niveau d'une de ses roues arrière, ladite roue aura tendance à pivoter et à s'enfoncer en direction de l'axe médian du véhicule jusqu'à entrer en contact avec le longeronnet. Cette configuration de choc est illustrée schématiquement en figure 1. Il a été constaté que c'est l'entretoisement entre la jante 5 et le longeronnet 3 qui souvent va stopper l'intrusion de la roue dans le véhicule. Le longeronnet 3 et le reste de la structure sont alors sollicités pour absorber le choc par déformation. Malheureusement, le déplacement de la roue en direction de l'axe médian entraîne avec elle le déplacement d'autres éléments du véhicule. Par exemple, il entraîne un déplacement du bras de suspension 7 sur lequel est montée la jante 5 de la roue. Par conséquent, le dispositif de suspension fixé audit bras de suspension 7 est également déplacé et la coupelle inférieure 9 recevant le ressort de suspension peut entrer en contact avec la coque de la batterie 11. Cela peut entraîner une déformation de ladite coque, la destruction de l'étanchéité de la batterie 11, même une perforation de celle-ci. Dans un tel cas, il y a un risque d'électrocution ou de brûlures chimiques pour les passagers.

Il existe à l'heure actuelle peu de dispositifs de protection des batteries de véhicule contre les chocs latéraux, il serait intéressant de pouvoir protéger la batterie d'un véhicule hybride ou électrique lors d'un choc poteau au niveau des roues arrière d'un véhicule.

Il serait intéressant de pouvoir offrir un niveau de protection supérieur à la batterie d'un véhicule hybride ou électrique lors d'un choc latéral de type poteau dans la partie arrière du véhicule, tout en assurant une implantation facile d'une telle solution de protection au sein de la caisse dudit véhicule qui n'alourdit pas les étapes de conception du véhicule. WO2014/015094A2 est considéré comme l'état de la technique le plus proche de l'objet de la revendication 1. WO2014/015094A2 divulgue un véhicule automobile comprenant au moins une roue présentant une jante placée en regard d'un élément de structure de véhicule selon la direction transversale dudit véhicule, dont le véhicule comprend en outre au moins un dispositif d'entretoisement ("extendable member 524, pin 530 and cylinder 520") agencé entre ladite jante et ledit élément de structure (Figure 11).

L'invention a pour objectif d'apporter une solution aux problèmes rencontrés dans l'art antérieur en proposant un nouveau véhicule offrant une protection des éléments placés entre les deux roues d'un même train contre le déplacement d'une desdites roues en direction de l'axe médian du véhicule lors d'une collision de type choc poteau au niveau de ladite roue.

A cet effet et selon un premier aspect, l'invention a pour objet un véhicule automobile comprenant au moins une roue présentant une jante placée en regard d'un élément de structure de véhicule selon la direction transversale dudit véhicule, le véhicule étant remarquable en ce qu'il comprend en outre au moins un dispositif d'entretoisement agencé entre ladite jante et ledit élément de structure. Le véhicule comprend en outre un amortisseur dont une coupelle inférieure de ressort est agencée en regard d'un élément à protéger, l'espacement entre au moins un dispositif d'entretoisement et la jante de roue est inférieur ou égal à l'espacement entre la coupelle inférieure et l'élément à protéger, le dispositif d'entretoisement se présentant sous la forme d'un bloc fixé sur ledit élément de structure.

Comme on l'aura compris à la lecture de la définition qui vient d'en être donnée, le dispositif d'entretoisement a un rôle de protection lors d'un choc latéral de type poteau centré sur l'une des roues du véhicule qui entraîne une déformation du train et l'endommagement des éléments situés à proximité de la roue, soit de manière directe, soit de manière indirecte par déplacement d'éléments fixés sur ledit train. Le positionnement du dispositif d'entretoisement entre la jante et un élément de structure permet un blocage plus rapide de la roue selon la direction Y du véhicule durant la cinématique de choc. Il permet également de limiter l'enfoncement de la roue. Ainsi, lors de la cinématique de déformation de caisse engendrée par la roue impactée, celle-ci viendra plus rapidement en contact avec la structure de véhicule limitant la course d'intrusion des éléments montés sur le train de roues qui sont susceptibles d'affecter l'intégrité d'éléments pouvant mettre en danger la sécurité des passagers, tels qu'une batterie ou un réservoir de carburant. Ainsi, le dispositif d'entretoisement fait office de « cale » entre la jante et les éléments de structure de caisse adjacents. Une telle configuration est très avantageuse en ce que le dispositif est très facile à monter lors de la conception du véhicule, de préférence tout à la fin de la production.

Selon un mode de réalisation de l'invention, le véhicule comprend une paire de roues arrière, et est remarquable en ce qu'au moins un dispositif d'entretoisement est agencé entre la jante d'une roue arrière et le longeronnet correspondant à l'élément de structure positionné en regard de ladite jante. De préférence, le véhicule est de type hybride ou électrique et comprend une batterie agencée pour être disposée au moins en partie entre les roues arrière. Lorsqu'il s'agit d'un véhicule de type hybride ou électrique, dans le cas d'un choc poteau dans la partie arrière du véhicule, le train arrière peut se déformer entraînant ainsi le déplacement d'autres éléments fixés sur dessus, lesdits éléments risquant d'entrer en collision avec la batterie. Le dispositif d'entretoisement est donc un dispositif de protection de la batterie. Dans le cas d'un véhicule à motorisation thermique, le dispositif d'entretoisement peut être un dispositif de protection d'un réservoir à carburant.

Selon l'invention, au moins un dispositif d'entretoisement fait partie de l'élément de structure ou est fixé sur ledit élément de structure. De manière alternative ou complémentaire, au moins un dispositif d'entretoisement est venu de matière avec le pare-boue ou est fixé sur le pare-boue. Plusieurs dispositifs d'entretoisement peuvent être combinés pour former un ensemble montrant l'épaisseur désirée.

Selon l'invention au moins un dispositif d'entretoisement se présente sous la forme d'un bloc fixé sur ledit élément de structure. De préférence, la fixation s'effectue par vissage, par griffage, par clippage ou par collage.

Selon un premier mode de réalisation, le véhicule étant doté d'au moins un pare-boue, ledit pare-boue comprenant un corps dont une paroi latérale est disposée en regard de l'élément de structure et présente une face interne et une face externe, le véhicule est remarquable en ce qu'au moins un dispositif d'entretoisement est un bloc fixé sur ou venu de matière avec la paroi latérale du pare-boue et est agencé pour s'étendre depuis sa face interne et/ou sa face externe.

Dans les modes de réalisation, le dispositif d'entretoisement se présente sous la forme d'un bloc constitué d'un corps plein ou d'un bloc cloisonné comportant un réseau de cloisons internes formées par un réseau de nervures orientées pour s'étendre selon la direction transversale du véhicule.

De manière alternative ou complémentaire, le dispositif d'entretoisement est confectionné en un matériau composite comprenant une matrice thermoplastique chargée en fibres.

Selon un troisième mode de réalisation, un dispositif d'entretoisement est formé par un relief sur la face de l'élément de structure disposée en regard de la jante, ledit relief s'étendant vers ladite jante selon la direction transversale dudit véhicule. De préférence, le relief est obtenu par emboutissage ou par moulage.

Selon un quatrième mode de réalisation, le dispositif d'entretoisement est fixé à l'élément de structure et se présente sous la forme d'un profilé formant un corps creux avec ledit élément de structure. Dans ce mode de réalisation, le dispositif d'entretoisement est avantageusement en métal, par exemple en acier ou en aluminium. De préférence, un bloc de mousse en polyuréthane est inséré à l'intérieur dudit corps creux. Selon cette configuration, le dispositif d'entretoisement est confectionné en métal.

Selon l'invention, il est possible de combiner les différents modes de réalisation de toutes les façons possibles. Un exemple de combinaison peut être l'emploi d'un dispositif d'entretoisement formé par corps creux selon le quatrième mode de réalisation avec un dispositif d'entretoisement fixé sur le pare-boue selon le deuxième mode de réalisation. Un autre exemple de combinaison comprend deux dispositifs d'entretoisement selon les premier et deuxième modes de réalisation se superposant au moins partiellement selon la direction transversale du véhicule. Selon encore un autre exemple, l'homme du métier peut combiner le premier et le troisième mode de réalisation, ou encore les premier, deuxième et troisième modes de réalisation.

Quel que soit le mode de réalisation choisi, le véhicule comprenant en outre un amortisseur dont une coupelle inférieure de ressort est agencée en regard d'un élément à protéger, le véhicule est remarquable en ce que l'espacement entre au moins un dispositif d'entretoisement et la jante de roue est inférieur ou égal à l'espacement entre la coupelle inférieure et l'élément à protéger. De préférence, l'élément à protéger est une batterie. Grâce à cette différence de jeu entre lesdites pièces du véhicule, la roue est bloquée lors d'un choc latéral de type poteau sans que l'étanchéité de l'élément à protéger, tel qu'un réservoir à carburant ou une batterie, soit endommagé de manière indirecte, c'est-à-dire par la coupelle inférieure de ressort d'un amortisseur.

L'invention sera bien comprise et d'autres aspects et avantages apparaîtront clairement à la lecture de la description qui suit, donnée à titre d'exemple en référence aux planches de dessin annexées sur lesquelles :
- La figure 1 illustre la cinématique d'un choc latéral de type poteau d'une roue arrière dans un véhicule selon l'art antérieur.
- La figure 2 illustre un exemple de réalisation d'un véhicule selon l'invention.
- Les figures 3 et 4 représentent un élément de structure sur lequel est fixé un dispositif d'entretoisement selon l'invention.
- Les figures 5 et 6 illustrent des exemples de réalisation d'un pare-boue et d'un élément de structure choisi parmi un longeronnet ou un brancard avant selon l'invention.
- Les figures 7 et 8 illustrent des exemples de réalisation d'un élément de structure choisi parmi un longeronnet ou un brancard avant selon l'invention.

Dans la description qui suit, le terme « comprendre » est synonyme de « inclure » et n'est pas limitatif en ce qu'il autorise la présence d'autres éléments dans le véhicule auquel il se rapporte. Il est entendu que le terme « comprendre » inclut les termes « consister en ». Les termes « inférieur », « supérieur », «avant» et « arrière » s'entendront par rapport à l'orientation générale du véhicule. « Inférieur » désignera une proximité au sol plus importante que « supérieur » selon l'axe vertical. Sur les différentes figures, les mêmes références désignent des éléments identiques ou similaires.

La figure 1 ayant été commentée en partie introductive, on se référera à présent à la figure 2 montrant un véhicule 1 automobile selon l'invention. Le véhicule 1 comprend au moins une roue présentant une jante 5 placée en regard d'un élément de structure 3 de véhicule selon la direction transversale dudit véhicule. Le véhicule 1 est remarquable en ce qu'il comprend en outre au moins un dispositif d'entretoisement 13 agencé entre ladite jante 5 et ledit élément de structure 3.

Par la suite, les figures seront commentées par rapport aux roues arrière d'un véhicule, et l'élément de structure considéré est un longeronnet. Néanmoins, l'homme du métier adaptera facilement l'enseignement technique du présent mémoire à la mise en place d'un dispositif d'entretoisement agencé entre la jante d'une roue avant et un brancard avant disposé en regard.

Dans l'exemple de réalisation illustré, le véhicule comprend une paire de roues arrière (une seule desdites roues est représentée), et au moins un dispositif d'entretoisement 13 est agencé entre la jante 5 d'une roue arrière et le longeronnet 3 correspondant à l'élément de structure positionné en regard de ladite jante 5. Néanmoins, de manière alternative ou complémentaire, l'élément de structure peut être un brancard avant. Le dispositif d'entretoisement est alors associé à une roue avant du véhicule. Un véhicule selon l'invention peut présenter des dispositifs d'entretoisement soit au niveau des roues avant ou au niveau des roues arrière ou au niveau à la fois des roues avant et des roues arrière.

Le véhicule selon l'invention peut présenter tout type de motorisation, thermique, hybride ou électrique. Néanmoins, l'invention présentera un avantage particulier pour les véhicules de type hybride ou électrique comprenant une batterie agencée pour être disposée au moins en partie entre les roues arrière. Le dispositif d'entretoisement 13 forme alors un dispositif de protection passive de la batterie 11 de propulsion.

Sur la figure 2, un dispositif d'entretoisement 13 est fixé sur de l'élément de structure 3 du véhicule 1 (ici, un longeronnet). Néanmoins, dans d'autres modes de réalisation de l'invention, il est possible qu'au moins un dispositif d'entretoisement fasse partie de l'élément de structure. De manière alternative ou complémentaire, au moins un dispositif d'entretoisement est venu de matière avec le pare-boue ou y est fixé. Plusieurs dispositifs d'entretoisement peuvent être combinés pour former un ensemble montrant une épaisseur donnée. Par exemple, il est possible d'envisager d'associer un relief montré par l'élément de structure et un dispositif d'entretoisement venu de matière sur le pare-boue en regard dudit élément.

Les figures 3 et 4 illustrent un premier mode de réalisation de l'invention dans lequel, le dispositif d'entretoisement 13 se présente sous la forme d'un bloc fixé sur ledit élément de structure 3. La fixation peut se faire par tout moyen. De préférence, la fixation s'effectue par vissage, par griffage, par clippage ou par collage. Alternativement, la fixation peut s'effectuer par aimantation. L'homme du métier trouvera sans peine un mode de fixation dudit dispositif sur ledit élément de structure.

Selon la figure 3, le dispositif d'entretoisement 13 se présente sous la forme d'un bloc cloisonné comportant un réseau de cloisons internes formées par un réseau de nervures orientées pour s'étendre selon la direction transversale du véhicule. De préférence, la structure interne est en nid d'abeille. La fixation d'un tel dispositif peut s'effectuer à l'aide de griffes mécaniques 15. De préférence, un dispositif est fixé audit élément de structure 3 par au moins deux griffes 15.

Selon la figure 4, le dispositif d'entretoisement 13 se présente sous la forme d'un bloc plein et est fixé par vissage. De préférence, le système vis-écrou est placé sur au moins une oreille 17 de fixation s'étendant depuis un des côtés du dispositif d'entretoisement 13 et prenant appui contre une des faces de l'élément de structure 3.

Il est entendu qu'il est possible de concevoir un dispositif d'entretoisement se présentant sous la forme d'un bloc cloisonné et doté d'oreilles 17 de fixation pour une fixation par vissage.

Le dispositif d'entretoisement 13 est destiné à être placée dans une zone préalablement vide de matière afin de permettre à la roue de se bloquer plus rapidement contre l'élément de structure en regard de la jante en cas de collision latérale de type poteau. Le ou les dispositifs d'entretoisement doivent présenter une certaine résistance et ne pas s'écraser sous l'effort résultant du choc.

Les dispositifs d'entretoisement 13 selon l'invention peuvent être réalisés en matériau composite thermoplastique ou thermodurcissable. Une mise en oeuvre préférée de l'invention privilégiera l'utilisation de matrices thermoplastiques qui présentent des limites au délaminage et à la rupture plus élevées que les résines thermodurcissables. La matrice polymère thermoplastique sera avantageusement sélectionnée parmi un ou plusieurs matériaux choisis entre le polypropylène (PP), le polyphtalamide (PPA), le polyétheréthercétone (PEEK), polysulfure de phénylène (PPS), le polyamide-imide (PAI), le polyétherimide (PEI), le polyarylamide (PAA), ou le polyamide (PA) tel que, par exemple, du polyamide 6 (PA 6 ou polycaprolactame) ou du polyamide 6.6 (PA 6.6 ou polyhexaméthylène adipamide). La matrice utilisée peut être renforcée avec des fibres, par exemple des fibres de verre ou des fibres de carbone.

Alternativement, les dispositifs d'entretoisement 13 peuvent être réalisés en métal, par exemple en acier ou en aluminium.

Lorsqu'il se présente sous la forme d'un bloc cloisonné, le dispositif d'entretoisement 13 peut être en métal ou en matériau composite. Lorsqu'il se présente sous la forme d'un bloc plein, il est avantageusement formé en matériau composite afin de ne pas alourdir trop le véhicule.

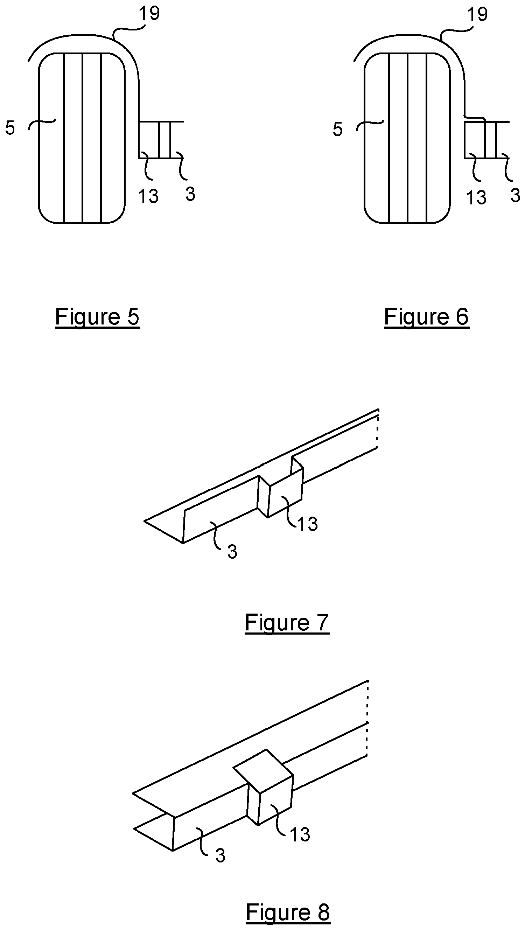

Selon un deuxième mode de réalisation illustré sur les figures 5 et 6, le véhicule étant doté d'au moins un pare-boue 19, ledit pare-boue 19 comprend un corps dont une paroi latérale est disposée en regard de l'élément de structure 3 et qui présente une face interne et une face externe. Un pare-boue est un dispositif, généralement en matériau thermoplastique, qui sépare l'intérieur de la structure d'un véhicule de l'espace extérieur, et qui est destiné à recevoir une roue. L'une des fonctions d'un pare-boue est, comme son nom l'indique, d'empêcher la boue qui vient se coller contre la roue d'un véhicule d'être projetée sur la structure métallique interne du véhicule. Les pare-boue remplissent également une fonction d'atténuation des bruits et contribuent à l'isolation acoustique de l'habitacle du véhicule. Ici, les termes « interne » et « externe » s'entendront par rapport à la courbure générale du pare-boue. La surface interne de la paroi du pare-boue est disposée en regard de la roue.

Avantageusement, au moins un dispositif d'entretoisement 13 est un bloc fixé sur ou venu de matière avec la paroi latérale du pare-boue 19 et agencé pour s'étendre depuis sa face interne et/ou depuis sa face externe. En effet, en particulier lorsque le dispositif d'entretoisement 13 est venu de matière avec la paroi latérale, il peut être traversant, c'est-à-dire qu'il s'étend de part et d'autre de la paroi latérale du dispositif pare-boue. Sur la figure 5, le dispositif d'entretoisement 13 est fixé sur la face externe de la paroi latérale du pare-boue 19. Sur la figure 6, le dispositif d'entretoisement 13 est fixé sur la face interne de la paroi latérale du pare-boue 19.

De même, le dispositif d'entretoisement 13, lorsqu'il est fixé ou venu de matière avec un pare-boue 19, peut se présenter sous la forme d'un bloc plein ou d'un bloc cloisonné comportant un réseau de cloisons internes participant à la rigidité de la pièce. Il peut être en métal ou en matériau composite, le matériau composite pouvant être comme décrit plus haut. Lorsqu'il est fixé sur le pare-boue, il est fixé par tout moyen. Selon un mode de réalisation préféré de l'invention, le ou les dispositifs d'entretoisement 13 selon l'invention sont en matériau thermoplastique et sont venus de matière avec le pare-boue 19. L'homme du métier réalisera sans peine un tel pare-boue présentant un dispositif d'entretoisement sur au moins une de ses faces formant un renflement, par exemple par moulage ou par co-moulage.

Selon un troisième mode de réalisation illustré en figure 7, un dispositif d'entretoisement 13 est formé par un relief sur la face de l'élément de structure 3 disposée en regard de la jante (non représentée), ledit relief s'étendant vers ladite jante selon la direction transversale dudit véhicule, donc s'étendant perpendiculairement à la face sur laquelle il est formé. De préférence, ledit relief est obtenu par emboutissage ou par moulage. Une telle configuration est avantageuse en ce que, lors de la conception du véhicule, il n'y a plus besoin d'effectuer une étape supplémentaire de montage pour ajouter une pièce additionnelle, ledit relief faisant office de dispositif d'entretoisement 13.

Selon un quatrième mode de réalisation illustré en figure 8, le dispositif d'entretoisement 13 est fixé à l'élément de structure 3 et se présente sous la forme d'un profilé formant un corps creux avec ledit élément de structure 3. La fixation s'effectue par collage, par soudage ou par vissage. De préférence, la fixation s'effectue par soudage durant l'étape de ferrage du véhicule.

Dans ce mode de réalisation, le dispositif d'entretoisement est avantageusement en métal, par exemple en acier ou en aluminium afin de montrer une résistance suffisante. La rigidité de l'ensemble est éventuellement complétée par l'insertion d'un bloc de mousse en polyuréthane, à l'intérieur dudit corps creux. Dans un tel cas, la mousse est avantageusement choisie pour être dense et présente donc à cet effet une densité d'au moins 80 g/l. Alternativement, il est possible d'insérer un bloc cloisonné dans ledit corps creux.

En revenant à la figure 2 on notera que, quel que soit le mode de réalisation choisi, le véhicule comprenant en outre un amortisseur dont une coupelle inférieure 9 de ressort est agencée en regard d'un élément à protéger 11 (ici une batterie), le véhicule est remarquable en ce que l'espacement entre au moins un dispositif d'entretoisement 13 et la jante 5 de roue est inférieur ou égal à l'espacement entre la coupelle inférieure 9 et l'élément à protéger 11. Grâce à cette différence de jeu entre lesdites pièces du véhicule, la roue est bloquée lors d'un choc latéral de type poteau sans que l'étanchéité de l'élément à protéger 11, tel qu'un réservoir de carburant ou une batterie, soit endommagé de manière indirecte par la coupelle inférieure 9 de ressort d'un amortisseur.

## Revendications

1. Véhicule (1) automobile comprenant au moins une roue présentant une jante (5) placée en regard d'un élément de structure (3) de véhicule selon la direction transversale dudit véhicule, au moins un dispositif d'entretoisement (13) agencé entre ladite jante (5) et ledit élément de structure (3), le véhicule (1) étant **caractérisé en ce qu'**il comprend en outre un amortisseur dont une coupelle inférieure (9) de ressort est agencée en regard d'un élément à protéger (11), l'espacement entre au moins un dispositif d'entretoisement (13) et la jante de roue (5) est inférieur ou égal à l'espacement entre la coupelle inférieure (9) et l'élément à protéger (11), le dispositif d'entretoisement (13) se présentant sous la forme d'un bloc fixé sur ledit élément de structure (3).

2. Véhicule (1) selon la revendication 1 comprenant une paire de roues arrière, ledit véhicule (1) étant **caractérisé en ce qu'**au moins un dispositif d'entretoisement (13) est agencé entre la jante (5) d'une roue arrière et le longeronnet (3) correspondant à l'élément de structure positionné en regard de ladite jante (5), de préférence le véhicule (1) est de type hybride ou électrique et comprend une batterie (11) agencée pour être disposée au moins en partie entre les roues arrière.

3. Véhicule (1) selon l'une des revendications 1 à 2, le véhicule (1) étant doté d'au moins un pare-boue (19), ledit pare-boue (19) comprenant un corps dont une paroi latérale est disposée en regard de l'élément de structure (3) et présente une face interne et une face externe, le véhicule (1) est **caractérisé en ce qu'**au moins un dispositif d'entretoisement (13) est un bloc fixé sur ou venu de matière avec la partie latérale du pare-boue (19) et est agencé pour s'étendre depuis sa face interne et/ou depuis sa face externe.

4. Véhicule (1) selon l'une des revendications 1 à 3, **caractérisé en ce qu'**au moins un dispositif d'entretoisement (13) :
- se présente sous la forme d'un bloc constitué d'un corps plein ou d'un bloc cloisonné comportant un réseau de cloisons internes formées par un réseau de nervures orientées pour s'étendre selon la direction transversale du véhicule (1) et/ou
- est confectionné en un matériau composite comprenant une matrice thermoplastique chargée en fibres.

5. Véhicule (1) selon l'une des revendications 1 ou 2, **caractérisé en ce que** le dispositif d'entretoisement (13) :
- est fixé à l'élément de structure (3) et se présente sous la forme d'un profilé formant un corps creux avec ledit élément de structure (3), de préférence un bloc de mousse en polyuréthane est inséré à l'intérieur dudit corps creux ; ou
- est formé par un relief sur la face de l'élément de structure (3) disposée en regard de la jante (5), ledit relief s'étendant vers ladite jante (5) selon la direction transversale dudit véhicule (1), de préférence le relief est obtenu par emboutissage ou par moulage.

## Patentansprüche

1. Kraftfahrzeug (1) mit mindestens einem Rad, das eine Felge (5) aufweist, die einem Fahrzeugstrukturelement (3) in Querrichtung des Fahrzeugs zugewandt ist, wobei mindestens eine Abstandeinrichtung (13) zwischen der Felge (5) und dem Strukturelement (3) angeordnet ist, wobei das Fahrzeug (1) ferner einen Dämpfer aufweist, dessen untere Federkappe (9) angeordnet ist Gegenüber einem zu schützenden Element (11) ist der Abstand zwischen mindestens einer Abstandvorrichtung (13) und der Radfelge (5) kleiner oder gleich dem Abstand zwischen der unteren Schale (9) und dem zu schützenden Element (11), wobei die Abstandvorrichtung (13) als Block ausgebildet ist, der an dem Strukturelement (3) befestigt ist.

2. Fahrzeug (1) nach Anspruch 1, das ein Paar Hinterräder umfasst, wobei das Fahrzeug (1) **dadurch gekennzeichnet ist, dass** mindestens eine Abstandeinrichtung (13) zwischen der Felge (5) eines Hinterrades und dem Längsträger (3) angeordnet ist, der dem der Felge (5) zugewandten Strukturelement entspricht, wobei das Fahrzeug (1) vom hybriden oder elektrischen Typ ist und eine Batterie aufweist 11) so angeordnet ist, dass sie zumindest teilweise zwischen den Hinterrädern angeordnet ist.

3. Fahrzeug (1) nach einem der Ansprüche 1 bis 2, wobei das Fahrzeug (1) mit mindestens einer Blende (19) versehen ist, wobei die Blende (19) einen Körper umfasst, dessen Seitenwand gegenüber dem Strukturelement (3) angeordnet ist und eine Innenseite und eine Außenseite aufweist, wobei das Fahrzeug (1) **dadurch gekennzeichnet ist, dass** mindestens eine Abstandvorrichtung (13) vorgesehen ist ist ein Block, der mit dem Seitenteil der Kotscheibe (19) an oder aus Material befestigt ist und von seiner Innenseite und/oder von seiner Außenseite aus sich erstreckt.

4. Fahrzeug (1) nach einem der Ansprüche 1 bis 3, **dadurch gekennzeichnet, dass** mindestens eine Abstandeinrichtung (13)
- in Form eines Blocks aus einem Vollkörper oder einem Klotzblock mit einer Anordnung von inneren Trennwänden, die durch ein Gitter von Rippen gebildet sind, die in Querrichtung des Fahrzeugs (1) ausgerichtet sind, und/oder
- aus einem Verbundwerkstoff hergestellt ist, der eine fasergefüllte thermoplastische Matrix umfasst.

5. Fahrzeug (1) nach einem der Ansprüche 1 oder 2, **dadurch gekennzeichnet, dass** die Abstandeinrichtung (13)
- an dem Strukturelement (3) befestigt ist und als Hohlkörper-Profil mit dem Strukturelement (3) ausgebildet ist, vorzugsweise ein Polyurethan-Schaumblock in den Hohlkörper eingesetzt ist; oder
- durch eine Erhebung auf der der Felge (5) zugewandten Seite des Strukturelements (3) gebildet ist, wobei sich die Erhebung in Querrichtung des Fahrzeugs (1) zu der Felge (5) erstreckt, vorzugsweise durch Tiefziehen oder Formen.

## Claims

1. Motor vehicle (1) comprising at least one wheel having a rim (5) placed next to a vehicle structural element (3) in the transverse direction of the vehicle, at least one interlocking device (13) arranged between the rim (5) and the said structural element (3), the vehicle (1) being **characterized in that** it also includes a damper including a lower (9) spring coupon is arranged in relation to an element to be protected (11), the spacing between at least one interlocking device (13) and the wheel rim (5) is less than or equal to the spacing between the lower coupon (9) and the element to be protected (11), the interlocking device (13) being in the form of a block attached to the said component structure (3).

2. Vehicle (1) according to claim 1 comprising a pair of rear wheels, that vehicle (1) being **characterized in that** at least one interlocking device (13) is arranged between the rim (5) of a rear wheel and the rim (3) corresponding to the structural element positioned next to that rim (5), preferably the vehicle (1) is of hybrid or electric type and includes a battery (11) arranged to be at least partly arranged between the rear wheels.

3. Vehicle (1) According to one of the claims 1 to 2, the vehicle (1) having at least one mud shield (19), the mud shield (19) having a body with a side wall facing the structural element (3) and having an internal face and an external face, the vehicle (1) is characterized as having at least one spacing device (1) 3) is a block attached to or coming from material with the side part of the mudshield (19) and is arranged to extend from its inner face and/or from its outer face.

4. Vehicle (1) in accordance with one of the claims 1 to 3, **characterized by** at least one interlocking device (13):
- in the form of a block consisting of a full body or a partitioned block comprising a network of internal partitions formed by a network of ribs oriented to extend according to the transverse direction of the vehicle (1) and/or
- is made of a composite material including a thermoplastic matrix loaded with fiber.

5. Vehicle (1) according to one of the claims 1 or 2, characterized as the intersecting device (13):
- is attached to the structural element (3) and is in the form of a profile forming a hollow body with the structural element (3), preferably a polyurethane foam block is inserted inside the hollow body; or
- is formed by a relief on the face of the structural element (3) arranged next to the rim (5), the said relief extending to the rim (5) according to the transverse direction of the vehicle (1), preferably the relief obtained by stamping or molding.
